(19) Europäisches Patentamt
European Patent Office
Office européen des brevets

(11) **EP 2 038 969 B1**

(12) **FASCICULE DE BREVET EUROPEEN**

(45) Date de publication et mention
de la délivrance du brevet:
**11.01.2012   Bulletin 2012/02**

(21) Numéro de dépôt: **07787398.2**

(22) Date de dépôt: **11.07.2007**

(51) Int Cl.:
***H01S 3/102*** *(2006.01)*      ***H01S 3/00*** *(2006.01)*

(86) Numéro de dépôt international:
**PCT/EP2007/057127**

(87) Numéro de publication internationale:
**WO 2008/006862 (17.01.2008 Gazette 2008/03)**

(54) **PROCEDE ET DISPOSITIF DE CONTRÔLE SPECTRAL DANS LES CHAÎNES LASER A DERIVE DE FREQUENCE**

**VERFAHREN UND EINRICHTUNG ZUR SPEKTRALSTEUERUNG IN FREQUENZUMSETZUNGS-LASERVERSTÄRKERN**

**METHOD AND DEVICE FOR SPECTRAL CONTROL IN FREQUENCY CONVERSION LASER AMPLIFIERS**

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité:  **11.07.2006   FR 0606305**

(43) Date de publication de la demande:
**25.03.2009   Bulletin 2009/13**

(73) Titulaire: **Thales**
**92200 Neuilly Sur Seine (FR)**

(72) Inventeurs:
• **FALCOZ, Franck**
**F-91410 Dourdan (FR)**
• **MARQUIS, Emmanuel**
**F-78830 Bullion (FR)**

(74) Mandataire: **Esselin, Sophie**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-00/01101          US-A- 5 144 629**
**US-A1- 2005 265 407**

• **ZHIYI WEI ET AL: "Optimized Design and Construction of 100TW Ti: sapphire Laser --- Toward to phase controlling, Spectrum shaping and wave-front correction" LEOS, 2005 IEEE ANNUAL MEETING CONFERENCE PROCEEDINGS SYDNEY, AUSTRALIA 23-27 OCT. 2005, PISCATAWAY, NJ, USA,IEEE, 23 octobre 2005 (2005-10-23), pages 619-620, XP010886708 ISBN: 0-7803-9217-5**
• **OISHI YU ET AL: "Sub-10 fs, multimillijoule laser system" REVIEW OF SCIENTIFIC INSTRUMENTS, AMERICAN INSTITUTE OF PHYSICS, US, vol. 76, no. 9, 16 septembre 2005 (2005-09-16), pages 93114-93114, XP012079698 ISSN: 0034-6748**
• **PLANCHON T A ET AL: "Adaptive wavefront correction on a 100-TW/10-Hz chirped pulse amplification laser and effect of residual wavefront on beam propagation" OPTICS COMMUNICATIONS, NORTH-HOLLAND PUBLISHING CO. AMSTERDAM, NL, vol. 252, no. 4-6, 15 août 2005 (2005-08-15), pages 222-228, XP004983380 ISSN: 0030-4018**
• **KALASHNIKOV ET AL.: "High peak power Ti: sapphire lasers: temporal contrast and spectral narrowing issues", PROC. OF SPIE, vol. 5975, 15 February 2006 (2006-02-15), pages 59750E-1-59750E-2, DOI: 10.1117/12.675540**

Remarques:
Le dossier contient des informations techniques présentées postérieurement au dépôt de la demande et ne figurant pas dans le présent fascicule.

EP 2 038 969 B1

**Description**

La présente invention se rapporte à un procédé de contrôle spectral dans les chaînes laser à dérive de fréquence, dites CPA (Chirped Pulse Amplification).

La montée en énergie des lasers à dérive de fréquence, de type saphir dopé au titane, conduit à l'apparition des problèmes de contrôle du spectre, et donc de la durée d'impulsion, dans les amplificateurs de haute énergie.

En effet, dans ce type d'amplificateur, le niveau de signal est par exemple proche de la saturation, ce qui entraîne des déformations du spectre amplifié, et limite donc la performance en termes de durée d'impulsion.

Une solution classique consiste à pré-compenser, en début de chaîne, la déformation spectrale. Cette solution à base de filtrage est naturellement pénalisante en termes de rendement, car elle agit par filtrage, et donc occasionne des pertes d'énergie.

La technologie à dérive de fréquence est basée sur l'utilisation d'un spectre large, d'un étirement d'impulsion, de l'amplification et de la re-compression.

Typiquement, les chaînes Ti :Sa ont un spectre d'oscillateur de 5 à 100nm, pour des durées d'impulsion comprimée de 150fs à 10fs environ. La capacité de la chaîne d'amplification à maintenir un spectre correct influe directement sur la capacité du laser à travailler en impulsions courtes.

Le rétrécissement spectral induit par les amplificateurs est donc un facteur clé d'obtention des performances de durée courte. De même, une forte déformation du spectre, par exemple asymétrique, perturbe la forme temporelle et dégrade le fonctionnement du laser.

Les amplificateurs utilisés sont de type n passages (2 à 4 classiquement, mais des configurations avec plus de passages existent) du faisceau dans le cristal, milieu amplificateur.

Le laser de pompe envoie une impulsion dans le cristal et le faisceau à amplifier est ensuite envoyé et effectue n passages pour optimiser l'extraction en énergie.

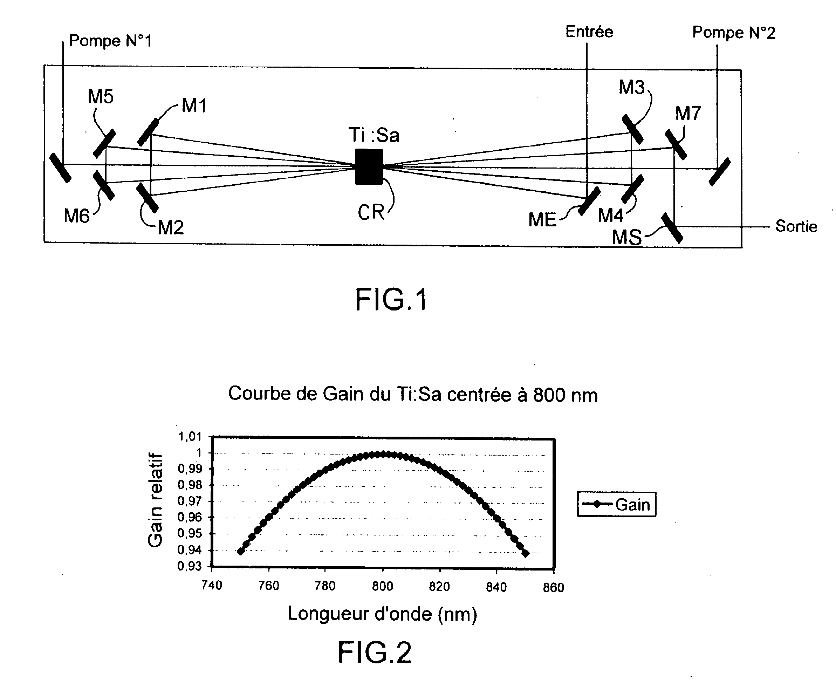

On a schématisé en figure 1 un tel amplificateur multi-passages, qui comporte essentiellement un cristal CR (par exemple Ti/Sa) recevant depuis un miroir d'entrée ME des impulsions d'entrée sous un angle différent de la normale à sa surface d'incidence, et plusieurs miroirs de renvoi M1 à M7 disposés de part et d'autre du cristal 1 de façon à faire traverser le cristal par le faisceau sous différents angles d'incidence, le dernier miroir M7 renvoyant ce faisceau vers la sortie via un miroir de sortie MS.

Le gain de l'amplificateur s'écrit :

$$E_{OUT} = J_{SAT}.S.\ln\left(\frac{J_{STO}}{J_{SAT}}\left(e^{\frac{E_{in}}{SJ_{SAT}}} - 1\right) + 1\right)$$

$J_{STO}$ étant la fluence stockée disponible pour le gain dans le milieu, $J_{SAT}$ la fluence de saturation de ce milieu et S la surface de cristal laser pompée. C'est l'équation classique de la théorie de Frantz et Nodvick.

Dans le tableau ci-dessous, on a fait figurer quelques exemples de valeurs de $J_{SAT}$ pour différents matériaux lasers :

| Matériaux | $J_{SAT}$ en J/cm$^2$ | Gamme spectrale |
|---|---|---|
| Colorants | ~0.001 J/cm$^2$ | Visible |
| Excimers | ~0.001 J/cm$^2$ | UV |
| Nd:YAG | 0.5 J/cm$^2$ | 1064 nm |
| Ti:Al$_2$0$_3$ | 1.1 J/cm$^2$ | 800 nm |
| Nd:Glass | 5 J/cm$^2$ | 1054 nm |
| Alexandrite | 22 J/cm$^2$ | 750 nm |
| Cr:LiSAF | 5 J/cm$^2$ | 830 nm |

En régime de petit signal, avec $J_{IN} \ll J_{SAT}$, $J_{IN}$ étant la fluence d'entrée, on peut approximer la relation de gain avec :

$$G = \frac{E_{OUT}}{E_{IN}} = e^{\left(\frac{J_{STO}}{J_{SAT}}\right)}$$

La courbe de gain des amplificateurs décrits précédemment étant de forme proche d'une gaussienne, à chaque passage dans le milieu, on observe un rétrécissement du spectre simplement dû au gain.

La courbe de la figure 2 montre un exemple typique de gain dans un cristal Ti/Sa en fonction de la longueur d'onde, cette courbe étant centrée sur la longueur d'onde de 800nm.

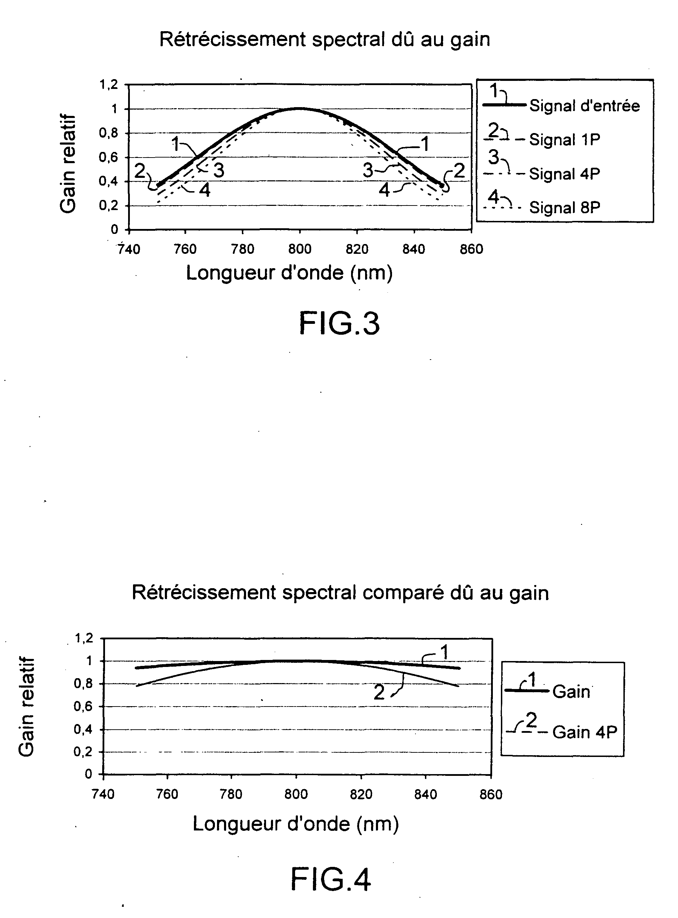

L'amplification dans ce milieu va donc conduire à appliquer sur un signal d'entrée de spectre limité un gain non uniforme en fonction de la longueur d'onde, ce qui a pour effet de provoquer une altération : le rétrécissement spectral. L'exemple de la figure 3 illustre cet effet, qui s'accentue avec le nombre de passages dans l'amplificateur. On a représenté sur cette figure 3 la courbe du signal d'entrée en fonction de sa longueur d'onde et les courbes du signal après 1, 4 et 8 passages dans le cristal, respectivement.

Le graphique de la figure 4 montre l'écart entre le gain mono-passage et le gain en quatre passages et fait apparaître l'effet de rétrécissement du spectre.

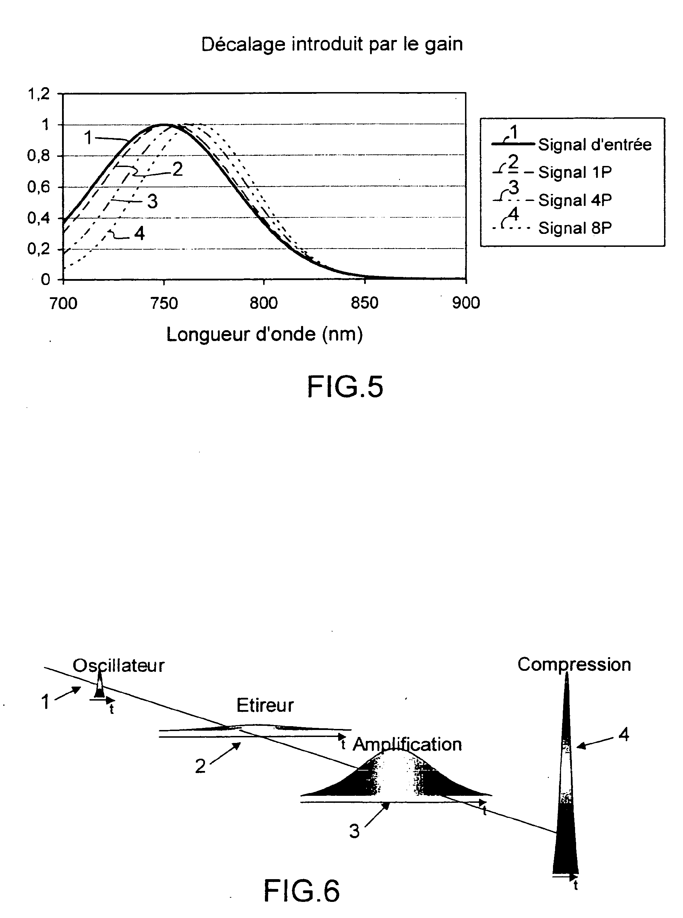

On notera que lorsque le signal d'entrée possède un spectre non centré par rapport au maximum de gain du milieu, le rétrécissement spectral s'accompagne d'un effet de décalage qui tend à ramener le signal sur le pic de gain maximum. Le graphique de la figure 5 montre un signal centré à 750 nm progressivement décalé vers 800 nm lors de l'amplification multi-passages (pour 1, 4 et 8 passages, respectivement).

Pour compenser cet effet, une pré-distorsion est utilisable par filtrage actif ou passif au prix d'une diminution du rendement du laser. En effet, les filtres utilisés ont des rendements de l'ordre de 50% car ils agissent (coupent) spectralement au maximum d'énergie.

L'impulsion amplifiée étant étirée (dispersée), le plus souvent positivement, le Demandeur a mis en évidence le problème suivant, décrit ci-dessous en référence aux figures 6 à 12.

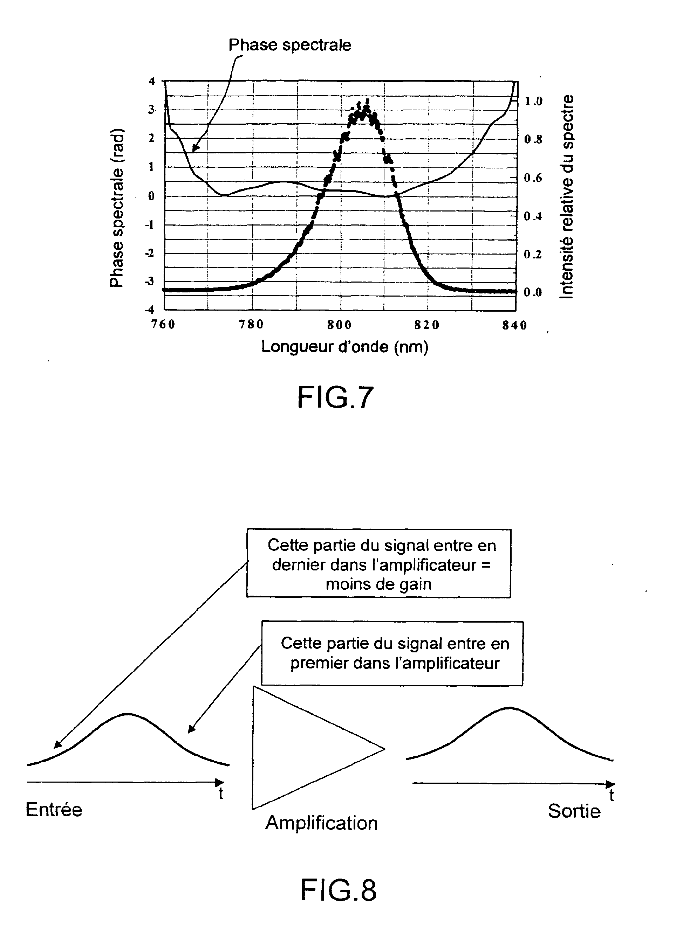

En effet, les chaînes à impulsions courtes utilisent un oscillateur à large spectre et ces impulsions courtes sont étirées temporellement pour être ensuite amplifiées et re-comprimées en sortie. On a schématiquement représenté une telle chaîne en figure 6, cette chaîne comportant essentiellement un oscillateur 1, un étireur 2, un ou plusieurs étages d'amplification 3 et un dispositif de compression 4. On a représenté un exemple de spectre d'un signal d'oscillateur Ti :Sa en figure 7. Sur cette figure 7, on a représenté en trait continu la phase spectrale. Une telle chaîne est connue par exemple d'après le document de ZHIYI WEI et al : « Optimized design and construction of 100 TW Ti sapphire laser --- Toward to phase controlling, spectrum shaping and wave-front correction », LEOS, 2005 IEEE Annual meeting conference proceedings, 23-27 Oct 2005, pages 619-626, ISBN 978-0-7803-9217-5, mais ce document n'évoque en aucune manière les problèmes liés au décalage de spectre et aux variations de gain dans un amplificateur de ce type.

Lorsque l'impulsion pénètre dans un amplificateur 5, les composantes spectrales initiales voient un gain g1 et sont amplifiées. Les composantes suivantes étant dans l'amplificateur voient un gain g2 qui a diminué, car le début de l'impulsion a « consommé » de l'énergie stockée. Cette action temporelle du gain est schématisée en figure 8.

On a un gain initial pour la première partie temporelle de la forme :

$$gi = \frac{j_{STO}}{J_{SAT}} \quad ,$$

,

et un gain final, qui tient compte de l'énergie extraite, de la forme :

$$gf = \frac{j_{STO} - J_{ex}}{J_{SAT}} \quad ,$$

$J_{ex}$ étant la fluence extraite de l'amplificateur.

Le gain apparent est donc plus élevé pour le début temporel du signal que pour la fin, ce qui induit une déformation spectrale du signal amplifié.

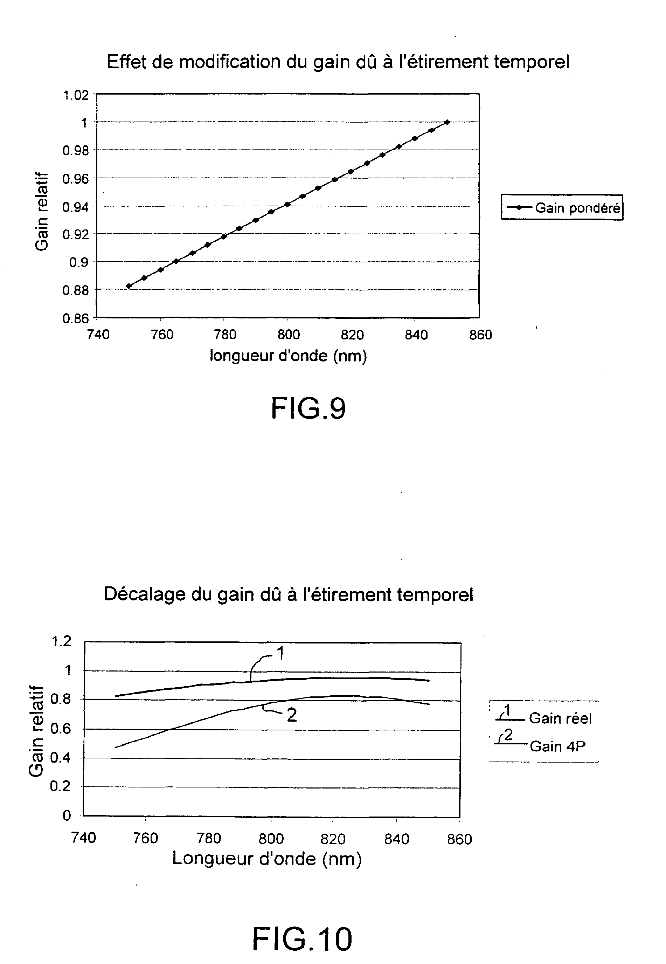

La courbe de la figure 9 montre l'effet de modification du gain d'un cristal laser dû à l'étirement temporel des impulsions à amplifier. Cette courbe donne la valeur du gain relatif (en unités arbitraires, comme c'est le cas pour toutes les autres courbes de gain) en fonction de la longueur d'onde du signal amplifié.

La figure 10 montre deux courbes du décalage du gain dû à l'étirement temporel en fonction de la longueur d'onde, respectivement pour un passage et pour quatre passages à travers le cristal.

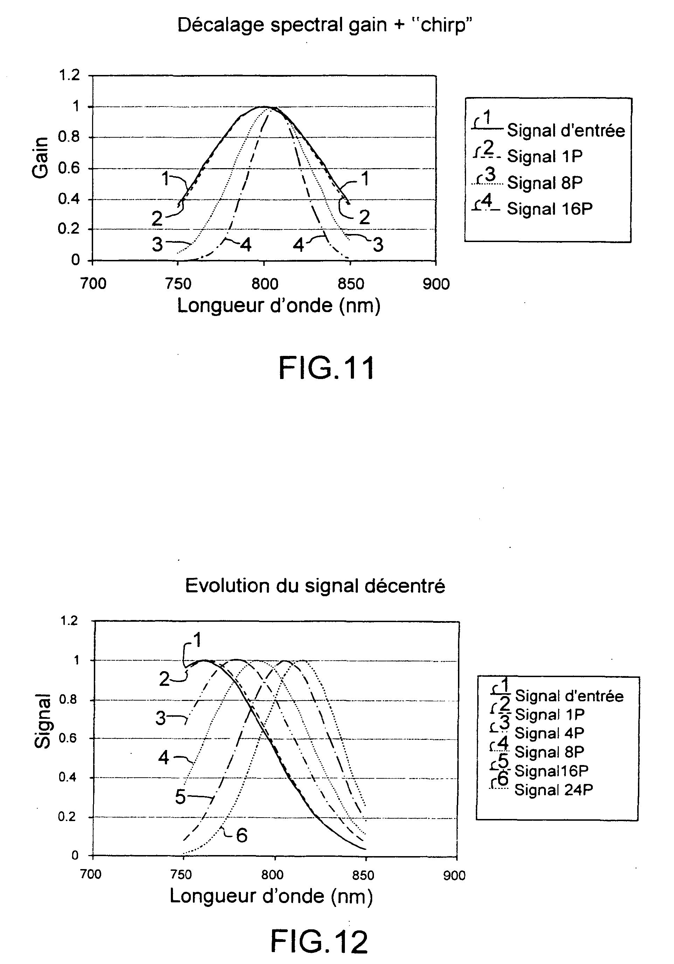

En plus du rétrécissement dû au gain, on observe, comme représenté en figure 11, un décalage du spectre vers les longueurs d'ondes extraites en premier (ici, les plus élevées).

On notera de plus que, lorsque le signal d'entrée est décentré par rapport au gain du milieu laser, l'effet de décalage est accentué. Ainsi, par exemple, comme représenté en figure 12, le signal d'entrée est centré à 760 nm, alors qu'après 24 passages dans le milieu laser, le signal final est centré à 820 nm, le décalage augmentant au fur et à mesure des passages successifs dans le milieu laser.

La combinaison de ces deux effets vient donc limiter fortement les performances des chaînes à dérive de fréquence car elle limite la re-compression des impulsions incidentes en vue d'obtenir à la sortie des impulsions de durées très courtes.

La présente invention a pour objet un procédé permettant d'optimiser le fonctionnement de chaînes laser CPA, pratiquement sans perte d'énergie et sans altération du spectre des impulsions produites, en particulier dans le cas d'impulsions ultracourtes (d'une durée de l'ordre de quelques fs).

Le procédé conforme à l'invention selon la revendication 1 s'applique à une chaîne laser à dérive de fréquence de type CPA pour produire des impulsions et comportant au moins deux étages amplificateurs à cristal d'amplification laser, et il est caractérisé en ce qu'il consiste à contrôler via le refroidissement du cristal d'au moins un des étages amplificateurs de la chaîne la position spectrale du gain dudit au moins un des étages amplificateurs.

Ainsi, l'invention consiste à contrôler, via la température du milieu, la position spectrale du gain d'un amplificateur, ce qui permet dans une chaîne composée de plusieurs étages de compenser efficacement les phénomènes d'altération du spectre des impulsions de sortie.

La présente invention sera mieux comprise à la lecture de la description détaillée d'un mode de réalisation, pris à titre d'exemple non limitatif et illustré par le dessin annexé, sur lequel :

- la figure 1, déjà décrite ci-dessus, est un schéma simplifié d'un étage amplificateur multi-passage d'une chaîne CPA,
- les figures 2 à 5, déjà mentionnées ci-dessus, sont différentes courbes de gain mettant en évidence des problèmes rencontrés dans les chaînes CPA classiques,

- la figure 6, déjà mentionnée ci-dessus, est un schéma simplifié d'une chaîne CPA classique,
- la figure 7, déjà mentionnée ci-dessus, est un diagramme d'un exemple de courbe d'évolution du spectre d'un oscillateur Ti :Sa et de sa phase spectrale,
- la figure 8, déjà mentionnée ci-dessus, est un schéma simplifié indiquant les parties d'un signal impulsionnel sur lesquelles agit un amplificateur d'une chaîne CPA,
- les figures 9 à 12, déjà mentionnées ci-dessus, sont différentes courbes de gain mettant en évidence des problèmes rencontrés dans les chaînes CPA classiques,
- la figure 13 est un schéma d'une chaîne CPA à deux étages amplificateurs conforme à l'invention et montrant comment est appliqué le procédé de l'invention,
- les figures 14 et 15 sont des courbes de gain mettant en évidence les effets du procédé de l'invention, et
- la figure 16 est un schéma d'une chaîne CPA à trois étages d'amplification conforme à l'invention.

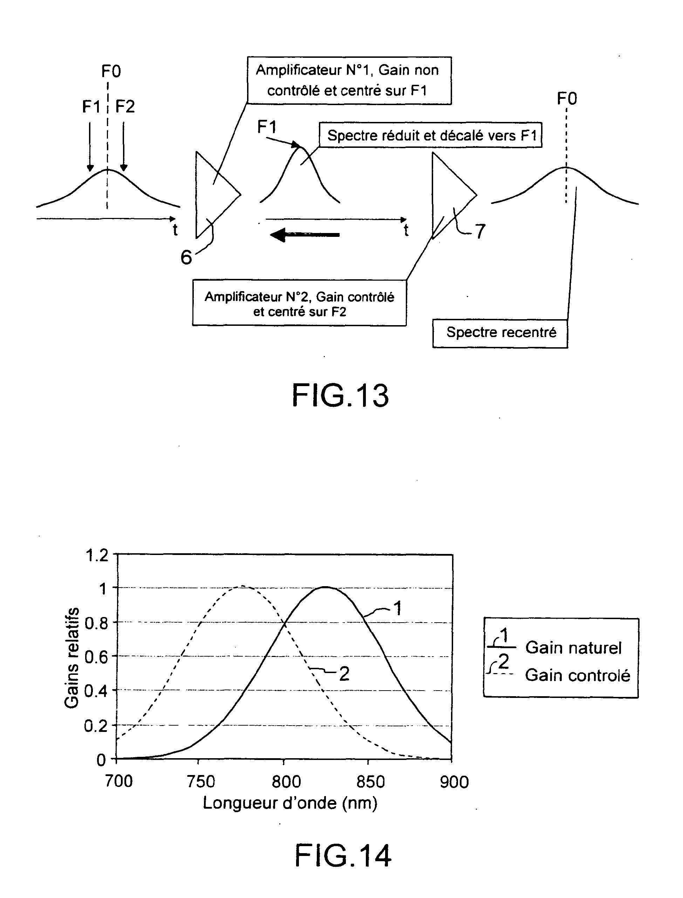

L'invention est applicable à un système doté d'au moins deux étages d'amplification. Elle consiste à réaliser sur un des étages un décalage du centrage de la courbe de gain via un contrôle de la température du cristal de cet étage amplificateur. On a schématisé en figure 13 un exemple d'une telle mise en oeuvre sur deux étages d'amplification successifs 6, 7 recevant une impulsion étirée centrée sur F0. L'étage 6 n'est pas contrôlé en température, sa courbe de gain est décalée et centrée sur une fréquence F1 inférieure à F0 (vers le bleu).

L'étage 7 est refroidi conformément à l'invention et sa courbe de gain est centrée sur F2, supérieure à F0. Il en résulte qu'à la sortie de l'étage 7 l'impulsion est recentrée sur F0.

Par exemple, lorsque l'on refroidit un cristal de Ti :Sa à basse température (de 20 K à 150 K, et typiquement à 77 K environ), on observe un décalage du maximum de gain vers les longueurs d'ondes plus faibles.

Le décalage spectral contrôlé en température est appliqué en opposition à la dispersion temporelle de l'impulsion, donc en opposition au phénomène de décalage vers les longueurs d'onde plus élevées décrit ci-dessus en référence à l'art antérieur.

Le cumul des amplifications successives des deux courbes de gain permet d'obtenir une configuration d'amplification qui évite le rétrécissement spectral, et donc préserve la durée d'impulsions courte.

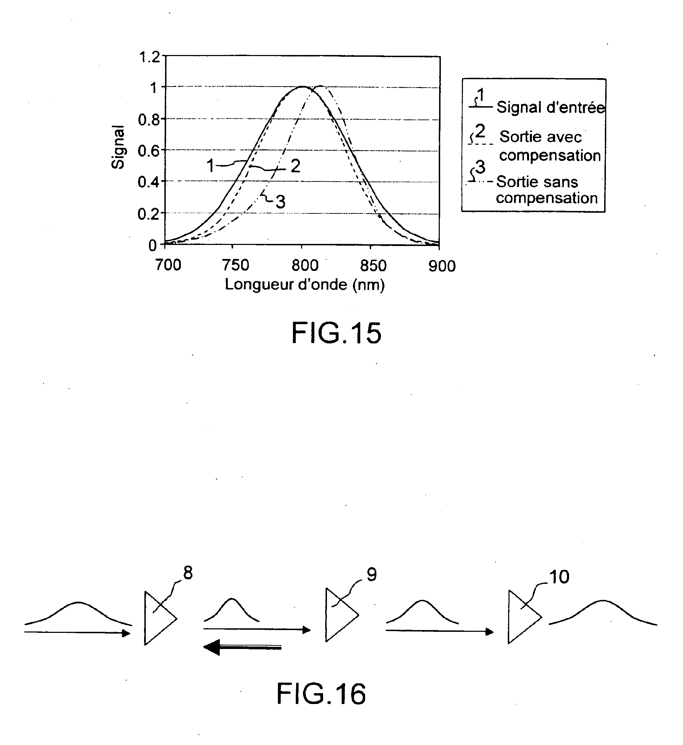

Selon un exemple de réalisation de l'invention, on considère deux étages d'amplification Ti/Sa disposés en cascade. Le premier étage est un amplificateur en mode « naturel » et on observe donc un décalage du gain vers les grandes longueurs d'onde. Le second étage est strictement identique au précédent, à ceci près que le cristal amplificateur est refroidi à 77 K environ, ce qui a pour effet de décaler le centrage de la courbe de gain vers les longueurs d'ondes plus courtes, comme représenté en figure 14. Le gain total de la chaîne est donc le cumul des deux gains des deux étages. Le graphique de la figure 15 montre clairement la différence des effets avec et sans le système de compensation le dispositif de l'invention.

Lorsque les deux amplificateurs sont identiques, le signal de sortie présente un spectre réduit et décalé vers les longueurs d'onde élevées (courbe 3). Lorsque le dispositif est utilisé sur un étage, le centrage du spectre est maintenu et le rétrécissement est pratiquement évité (courbe 2).

Le procédé de l'invention n'agit pas par filtrage, il n'a donc aucun impact énergétique et préserve le rendement des amplificateurs.

Le contrôle de température peut-être réalisé par tout système de refroidissement approprié: dispositif à effet Peltier, dispositif à refroidissement par liquide, doigt cryogénique,...

Le procédé de l'invention est applicable à tout matériau laser, et par exemple le Saphir dopé au titane, pour lequel une variation de température modifie la position centrale de la courbe de gain.

Dans une architecture à plusieurs étages d'amplification, le système est avantageusement disposé sur l'amplificateur dissipant le moins d'énergie, ce qui réduit le dimensionnement du système de contrôle en température.

Dans une architecture à plusieurs étages d'amplification, on dispose avantageusement le dispositif de refroidissement sur l'amplificateur fonctionnant dans un régime le plus proche de la saturation, de manière à limiter les effets spectraux de la saturation.

Le schéma de la figure 16 illustre à titre d'exemple une architecture à trois étages d'amplification (8 à 10), le premier (8) étant muni du dispositif de contrôle spectral qui vient compenser les effets de décalage produits par les deux étages suivants.

De façon avantageuse, le refroidissement est asservi de façon à maximiser la largeur du spectre des impulsions de sortie. Cet asservissement est réalisé par une mesure spectrale en sortie des amplificateurs et un rebouclage sur le(s) étage(s) refroidi(s).

En conclusion, l'invention permet de compenser le rétrécissement spectral dans les chaînes à dérive de fréquence (CPA) traitant en particulier des impulsions ultra-courtes (par exemple d'une durée de l'ordre de quelques femtosecondes). Elle permet d'atteindre les durées les plus courtes en maintenant un spectre large durant les phases d'amplification, et ceci sans altérer le rendement du laser. En effet, l'invention n'agit pas par filtrage soustractif, mais décale les courbes de gain sans diminuer l'énergie des impulsions. C'est donc une alternative économique aux filtres et ses effets sont réglables via un contrôle en température.

## Revendications

1. Procédé de contrôle spectral dans une chaîne laser à dérive de fréquence de type CPA pour produire des impulsions ultra-courtes et comportant au moins deux étages amplificateurs à cristal d'amplification laser, **caractérisé en ce qu'**il consiste à contrôler via le refroidissement du cristal d'au moins un des étages amplificateurs de la chaîne, la position spectrale du gain dudit au moins un des étages amplificateurs.

2. Procédé selon la revendication 1, **caractérisé en ce que** l'on refroidit le cristal à une température comprise entre 20 K et 150 K environ.

## Claims

1. A method for spectral control in a CPA type frequency-drift laser chain for producing ultra-short pulses and comprising at least two crystal amplifier stages for laser amplification, **characterised in that** it comprises controlling, by cooling the crystal of at least one of the amplifier stages of the chain, the spectral position of the gain of said at least one of the amplifier stages.

2. The method according to claim 1, **characterised in that** the crystal is cooled to a temperature that is between approximately 20K and 150K.

## Patentansprüche

1. Verfahren zur Spektralsteuerung in einer Laserkette mit Frequenzabweichung des CPA-Typs zum Erzeugen von ultrakurzen Impulsen mit wenigstens zwei Laserverstärkungskristail-Verstärkerstufen, **dadurch gekennzeichnet, dass** es das Steuern, durch Kühlen des Kristalls von wenigstens einer der Verstärkerstufen der Kette, der Spektralposition der Verstärkung der wenigstens einen der Verstärkerstufen beinhaltet.

2. Verfahren nach Anspruch 1, **dadurch gekennzeichnet, dass** der Kristall auf eine Temperatur zwischen 20K und 150K gekühlt wird.

FIG.1

FIG.2

Courbe de Gain du Ti:Sa centrée à 800 nm

## Rétrécissement spectral dû au gain

FIG.3

## Rétrécissement spectral comparé dû au gain

FIG.4

## Décalage introduit par le gain

FIG.5

FIG.6

Phase spectrale

## FIG.7

## FIG.8

Effet de modification du gain dû à l'étirement temporel

FIG.9

Décalage du gain dû à l'étirement temporel

FIG.10

Décalage spectral gain + "chirp"

FIG.11

Evolution du signal décentré

FIG.12

F0

F1 | F2

Amplificateur N°1, Gain non
contrôlé et centré sur F1

F1

Spectre réduit et décalé vers F1

F0

t

6

t

7

Amplificateur N°2, Gain contrôlé
et centré sur F2

Spectre recentré

## FIG.13

FIG.14

FIG.15

FIG.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ZHIYI WEI et al.** Optimized design and construction of 100 TW Ti sapphire laser --- Toward to phase controlling, spectrum shaping and wave-front correction. *LEOS, 2005 IEEE Annual meeting conference proceedings,* 23 Octobre 2005, ISBN 978-0-7803-9217-5, 619-626